Europäisches Patentamt

European Patent Office

Office européen des brevets

(19)

(11) **EP 1 345 353 A1**

(12) **EUROPEAN PATENT APPLICATION**
published in accordance with Art. 158(3) EPC

(43) Date of publication:
**17.09.2003 Bulletin 2003/38**

(51) Int Cl.⁷: **H04L 9/20**, H04N 1/32,
G09C 5/00, G06T 11/20

(21) Application number: **01994838.9**

(22) Date of filing: **21.12.2001**

(86) International application number:
**PCT/ES01/00501**

(87) International publication number:
**WO 02/052783 (04.07.2002 Gazette 2002/27)**

(84) Designated Contracting States:
**AT BE CH CY DE DK ES FI FR GB GR IE IT LI LU
MC NL PT SE TR**

(30) Priority: **22.12.2000 UY 26500**

(71) Applicant: **Vazquez Balsa, Rosa
Montevideo (UY)**

(72) Inventor: **LOPEZ VAZQUEZ, Carlos, Manuel
Montevideo (UY)**

(74) Representative: **Duran Moya, Carlos
DURAN-CORRETJER
Còrsega, 329
(Paseo de Gracia/Diagonal)
08037 Barcelona (ES)**

(54) **METHOD OF INSERTING HIDDEN DATA INTO DIGITAL ARCHIVES COMPRISING POLYGONS AND DETECTION METHODS**

(57) The invention relates to a method of inserting a watermark into a digital archive comprising polygons (e.g. a map) and of detecting the absence or presence of said watermark. The watermark does not alter the dig-ital map in any noticeable manner and it cannot be mod-ified by common isometric transformations.

EP 1 345 353 A1

Printed by Jouve, 75001 PARIS (FR)

**Description**

**THE PROBLEM TO BE SOLVED:**

Maps, CAD design and similar maps usually involve a set of partially connected lines and polygons. They might as well include some texture information, but this can be ignored for this application. In digital form, a map can be represented as a list of (X, Y, attribute$_1$, attribute$_2$, etc.) records, being the first two the co-ordinates in a suitable reference frame of points, and the others some optional extra information which is not important for us. For example, the name of a street, its type of pavement, etc. These records describe the nodes of a polygon which might be closed or open (i.e. the first and the last element might coincide or not). Two consecutive records can be regarded as representing a line segment.

Digital maps are expensive to produce, because their acquisition cannot be easily accomplished by automated means. A scanner is a device that can produce a digital version of an image of any type, including a map. However, the transformation from a pixel organisation to the above mentioned (X, Y, etc.) format requires substantially more effort than mere scanning. Once the map is in digital form, perfect copies can be made almost without effort. Thus, there is a strong interest in protection against piracy of these expensive and extremely easy to copy such files. One typical solution is to encrypt the data with a suitable procedure, which renders it useless for anyone that has no access to the proper key, and this key would be delivered to the legal client. However, once unencrypted, the digital map is again exposed to unfair copy.

The goal to be solved here is how to embed information regarding the owner, the customer, the date of purchase, the supplier, etc. in such a way that it will go unnoticed within the data itself. If a supposedly illegal copy is detected, by accessing it, the first client to which it was sold or the supplier that delivered it, could be identified.

Other application is to assure data integrity, i.e. allowing customers to check whether or not the original map has been damaged, edited or transformed. In any case, the resulting digital file should be almost identical to the original one and definitively, the watermark should not be evident in any way. Only with the appropriate program and the secret and correct keys should the watermarks be extracted.

The process to embed hidden information in the dataset will be denoted here as "watermarking", and the information itself will be named as "the watermark". The science that inserts hidden data in another is known as "Steganography". This document is devoted to analyse one method for embedding an invisible watermark in a digital 2D dataset and to detect, later on, the watermark. No precedents of similar methods are known for this type of data, but literature and patents can be found on other types of digital data (audio, video, images, etc.).

**STATE OF THE ART: WATERMARKING OF DIGITAL DATASETS**

*The following is part of a paper under consideration for journal publication*.

**1. Cryptography vs. Steganography: Brief Introduction to Digital Watermarking**

The goal of cryptography is to protect the content of the dataset from unauthorised users *during transmission*, modifying the original dataset in order to make it unreadable by means of a process known as encrypting. Some secret numbers (named *keys*) are required to decrypt the files. See Schneier (1995) for a good introduction to the subject.

Once the original dataset has been recovered, there is no further protection: perfect copies of the original can be made without participation or knowledge of the legitimate owner. Thus, the usefulness of cryptography in the case under consideration, is limited to the distribution stage. Steganography is a somewhat different technique, because it attempts to add extra information to the dataset. The extra information (*the watermark*) is included in a file without being noticed; a watermarked image is expected to be indistinguishable from the unwatermarked, original one. This is a significant difference to the encrypted message, which is unreadable without the right key. In contrast to cryptography, steganography does not immediately arouse suspicion of something secret or valuable. Instead, it hides an important message within an unimportant one (Bender *et al.*, 1996; Anderson and Petitcolas, 1998).

The most interesting case for maps applications (generically known as Geographic Information Systems, GIS) is the case where the watermark is not evident, and we will discuss later on how this can be accomplished. Through the watermark, the dataset bears some extra information which might identify the distributor (if different from that of the data producer), the buyer, the date of the transaction, etc. making it possible to trace back the dataset to its source.

The watermark can be used to prove data integrity: if the dataset has been edited or modified *after* the watermark has been inserted, the watermark might reveal that, and in some cases, also which part has been affected. If the watermark is too sensitive to changes in the dataset, it is denoted as a *fragile watermark*.

Conversely, if the watermark is capable of surviving in the dataset even when the latter has been edited (inadvertently or deliberately), it is denoted as a *robust watermark*. This is the most interesting case, because the malicious user might want to acquire a legitimate copy, edit it and later distribute the modified one arguing that he was the author. If the watermark is robust, it can be recovered and used to prove ownership. Another application for watermarking is for use control: the case of the Digital Video Disc (DVD) is a good example (Cox and Linnartz, 1998). The watermark and the disk player interact and, for example, the time of use can be checked, the number of backup copies made can be counted, etc. For GIS applications this is of limited interest today, because current software is not expected to process watermarked datasets.

The case of robust watermarking is the main subject of this paper. A short, good introduction can be found in Voyatzis and Pitas (1999). The term *robust* should be interpreted in a framework of possible *attacks.* This term denotes generic transformations of the dataset, performed by either legitimate or illegitimate users, which modify it in some way whatsoever. In traditional steganography, the goal of the attack is to decode the watermark. In this paper, typical attacks are designed to remove it, being unimportant the watermark itself. The literature shows that no current watermarking technique is immune to all possible attacks. At best, we can choose it in order to assure that the watermark will be robust for some of them, which in turn is highly dependent on the file characteristics and the intended application.

## 2. The Case of Digital Images (Raster)

This is a typical dataset form used in many GIS operations. Its main characteristic is that there is a clear order (row, columns) in the data, in opposition to vector and point datasets, which will be considered later. Satellite imagery (LANDSAT, SPOT, etc.) as well as aerial photography falls within this classification.

The watermarking of still images has received significant attention from the research community (Voyatzis *et al.*, 1999; special issues of *Signal Processing* and *IEEE Journal of Selected Areas in Communication*, both in 1998, etc.). The driving force is the copyright protection of artistic imagery.

Robust watermarking schemes can be applied in spatial or spectral domains. The former applies the watermark keeping the (column, row) structure of the image. It is the option required for visible watermarks. For the more common invisible ones, the choice of the spatial domain produces weaker watermarks, because changes need to be performed in the least significant bits (LSB) of the image in order to assure low perceptual changes. An immediate consequence is that few bits can be inserted; see the pioneer work of van Schyndel *et al.* (1994) for details. For common GIS images, the meaning of "low perceptual" and "LSB" might be different. For the case of aerial photography, which will be processed by humans, the limit is related to the human visual system. For satellite data, human limitations are (usually) unimportant because the image will be processed and analysed by a computer. In such cases, the LSB limit will be more precisely defined: it is related to the properties of the sensor (an example is the remote sensing data) or the inherent uncertainty of the measured parameter.

As another example of spatial domain watermarking, Nikolaidis and Pitas (1996) suggested dividing the pixels in the image in two sets, A and B, by applying a pseudo-random partition using a secret key. The luminance of the pixels of set A is increased by a fixed integer $k$, small enough to produce an imperceptible change. Given the secret key and $k$, the watermark is detected by comparing the difference of average luminance in sets A and B, which will be near k if the watermark is present, and nearly zero in other cases. The original image is not required for the test.

Kutter *et al.* (1998) proposed a similar system that exploits the low sensitivity of the human visual system toward changes of high frequencies in the blue colour. The pixel modifications are proportional to the luminance and the watermark bits determine the sign of the modifications. Nikolaidis and Pitas (1998) recognised that a significant problem of all spatial domain techniques is that the watermark might not survive JPEG loose compression, which is a typical image transformation. This is due to the fact that the watermark is essentially a low power, white noise. They modified their original method by varying the integer $k$ added to each pixel, but keeping its total sum as before. The set A is formed in a different way, because the pixels are now grouped in small blocks of 2x2 or 2x4 size. An optimum $k_{mn}$ is separately calculated for each block$_{mn}$ minimising the contribution to the higher frequency components of the Discrete Cosine Transform (DCT) of the whole image.

The other possibility is to store the watermark in the spectrum domain. The image can be transformed through well known and defined procedures (Discrete Fourier Transform, DCT, Wavelets, etc.). The coefficients can be analysed and modified according to some strategy, and the inverse transformation will produce a very similar image, but now will bear some extra information embedded. We denote as $\alpha$ the vector holding the watermark, and it will be assumed that its elements are drawn at random from a Gaussian pdf with zero mean and unit variance. The method proposed by Cox *et al.* (1997) suggests modifying just the largest coefficients of the DCT with the following transformation:

$$c'_i = c_i + \varepsilon . \alpha_i \; i = 1..n; n < N^2$$

being $c_i$' the new coefficient, $c_i$ the original one, $\varepsilon$ a small scaling factor, $\alpha_i$ the i-th term of the watermark and n the length of the watermark. The alternative to modify the least significant terms of the DCT does not survive the JPEG compression, so it has not been further considered in the literature. The idea is that if the watermark must not be evident, the changes should be small. However, small changes are badly affected by noise, except if they are concentrated in the most significant perceptual terms of the spectrum. Their method belongs to the class of *spread spectrum techniques.* Operationally, the image is decomposed in tiles of NxN size, and the watermark is applied independently to either all or just selected tiles. The watermarked image is recreated through the inverse DCT transform. To recover the watermark, the DCT transform of the original image is usually required, in order to verify the following relationship:

$$\frac{c_i'-c_i}{\varepsilon}=a_i'$$

Zeng and Liu (1999) proposed an alternative method that does not require the original image, but is less robust. If the correlation between $\alpha$ and $\alpha'$ is larger than a given threshold, the watermark is claimed to be detected. This approach is robust against some typical valid transformations, like JPEG compression, and also printing + scanning attacks. However, in its straightforward implementation version, it is amenable to protocol attacks (Craver *et al.*, 1998; Memon and Wong, 1998, etc.).

Two other important issues are the maximum lengths of the watermark, and how many watermarks can be reliably stored in a given image. It is customary to measure the strength of a cryptographic key in bits: larger keys imply stronger security. If the length of the key is small enough, it can be discovered by brute force with an exhaustive trial of keys, and once found, the removal is easy. Smaller watermarks can be easily removed, provided the watermarking algorithm is known. Long watermarks are also required in order to *univocally* identify the owner, customer, etc. They might be difficult to produce and insert, because there are limits to be honoured. Servetto *et al.* (1998) assumes that if attacks can be modelled as additive noise, upper bound formulas for the length in bits can be derived. The estimate of the number of different watermarks that can be stored in the same image is also a difficult problem, and as before, it relies heavily on assumptions about the noise.

There are some algorithms that rely in the limitations of the human vision system, such as the one reported by Podilchuk and Zeng (1998) or Delaigle *et al.* (1998). For many applications, an image can be transformed and still be useful until the changes become noticeable for humans. One example is loose image compression (algorithms which degrade the original image quality in order to achieve higher compression ratios than would be otherwise impossible). Visual models provide a set of thresholds that describe the *Just Noticeable Differences* (*JND*) that can be perceptually detected. If the modifications are below such thresholds, the watermark can be strong but still unnoticeable. As mentioned before, the usefulness of JND based models for GIS datasets is however limited to photo-interpretation tasks.

The author is not aware about current procedures from major data producers of (for example) satellite data. They sell the image under a contract that precludes the buyer for further redistribution, use, etc. of the material, but no information is given about any further protection apart from the contract. The reasons might be in the legal side, which will be treated in another part of the paper. The watermarking of digital still images is an active market; there are several commercial providers (Digimarc Inc., Blue Spike Inc., Signum Technologies, SysCoP, etc.). It is difficult to draw any conclusive statement on which is better than the other, because some of the companies do not provide detailed information on the algorithm embedded in their applications. A functional comparison can be made, however, analysing the resistance of the watermark to different attacks. Kutter and Petitcolas (1999) proposed a benchmark for comparison purposes, connected to the characteristics of the human visual system. They used the StirMark software (Petitcolas and Kuhn, 1997) to perform the attacks.

**3. The Case of Vector Datasets (Maps)**

It is surprising that, despite the large costs associated to collecting and assembling vector datasets, the "copy protection means" have not caught the interest of the GIS research community. The closest area is the creation of 3D mesh models for Virtual Reality and CAD applications. Since some ideas can be borrowed from there, we will now summarise the most relevant references.

Virtual Reality Modelling Language (VRML) scenes are becoming increasingly popular in the Internet. They are composed of audio samples, textures and background images, and 3D geometry (model) based data. The most expensive part to develop is the last one, which should be also the target for an aspiring forger. Fortunately, it is also the one more likely to hold the watermark (Ohbuchi *et al.*, 1997; Benedens, 1999). Notice that the VRML standard allows the insertion of information in the file, through comments and annotations. Format converters however, easily strip them out, so they are useless for watermarking purposes.

One important characteristic of 3D models is that they lack an implicit order. Audio, video and still images are sequences of time series. Evidently, the vertices, edges and faces in a 3D model can be ordered, but they may require an orientation frame and an origin defined in advance. A second characteristic is that no visually unique representation of the model exists. It can be modified, for example, by moving vertices considerably without significant change in the overall visual quality. To be rendered at reasonable speeds, 3D models are usually compressed through simplification (Garland, 1999). In such process, they might loose even 86% of their faces without noticeable changes. This explains why it is customary to store the same watermark more than once in the 3D model, allowing the recovery even after having split the model.

Ohbuchi *et al*. (1997) discusses alternatives for watermarking 3D meshes. For example, co-ordinates of points and vertices can be modified to embed data, or scalar or vector quantities (like the area of a triangle, or the normal to a surface) can be changed. However, some simple transformations can destroy it, so it is interesting to consider just the quantities that are invariant in some geometrical transformations. A hierarchy of transformations is established, as presented in Table 1. A second possibility is to embed the watermark in the topology, taking advantage of its lack of uniqueness. For example, given four vertices forming a square, they can be converted to two triangles in two different ways. Thus, one bit of information can be stored depending on the position of the diagonal. This approach can survive many geometrical transformations, but not a topological modification or re-meshing.

Table 1

| Alternatives for embedding information in the geometry of a 3D model (from Ohbuchi *et al*., 1997) | |
|---|---|
| 1) | Altered by almost any transformation |
| a) | Co-ordinates of points |
| 2) | Invariant to rotation and translation |
| a) | Length of a line |
| b) | Area of a polygon |
| c) | Volume of a polyhedron |
| 3) | Invariant to rotation, translation and uniform scaling |
| a) | Two quantities that define a set of similar triangles (e.g., two angles) |
| b) | Ratio of areas of two polygons |
| 4) | Invariant to related transformation |
| a) | Ratio of lengths of two segments of a straight line |
| b) | Ratio of the volumes of two polyhedrons |
| 5) | Invariant to projection transformation |
| a) | Cross-ratio of four points on a straight line |

The class of expected valid geometrical transformations for the case of GIS datasets is more restricted. In some cases, GIS datasets have either absolute co-ordinates, or local co-ordinates linked to a reference system. In any case, substantially changing the co-ordinates might render a dataset useless, because it will not fit with others using the same original system. Thus, an appropriate watermarking system for GIS datasets might lack robustness against types 4 and 5 transformations without penalty. However, co-ordinates might be known with uncertainty (which should not be confused with limited machine precision). This implies that random changes of given values by an amount below the uncertainty, will produce a semantically equivalent dataset, and thus giving space to store a watermark.

As suggested before, it is possible to store one bit of information by triangulating in one way or another a square, or by fixing the ratio of areas of two polygons. However, to be useful, the watermark information should have more bits, requiring a number of primitives to store it, and an order (explicit or implicit) among them. Ohbuchi *et al*. (1998) considers three possibilities: a) there is a global arrangement in the primitives, b) there is a local arrangement or c) there is no arrangement, but subscript information is also encoded with the primitive. Examples of local or global arrangements are 1D sequences generated by sorting triangles according to their areas, and 2D arrangements of embedding primitives based on the connectivity of triangles in an irregularly tessellated triangular mesh. Global arrangements tend to have higher information density than other methods. Local arrangements and subscript arrangements have the advantage that the watermark might be robust to a resection of a model, because the same part of the watermark can be repeatedly embedded in the mesh.

Figure 1 Basic unit for Triangle Similarity Quadruple Embedding (TSQE)

To illustrate this, we will show how the subscript arrangement might work. In the first place, a set of four triangles sharing one side (as presented in Fig. 1 left) is identified in the mesh (Fig. 1 right). The grey one will be used as the reference and its shape will denote that it is part of the watermark. Thus, we modify its vertices in order to force its two smaller inner angles to be (for example) 33 and 57 degrees. Then we modify briefly the one denoted with S to have 20 and 60 degrees, encoding number 3 according to a previously agreed lookup table. This number is the subscript, and indicates that the information corresponds with the $3^{rd}$ element of the watermark. Triangles D1 and D2 store the information itself with the same lookup table, holding D1 the first element because its area is larger than the one of D2. To recover the whole watermark, we look for all triangles with internal angles that measure "exactly" 33 and 57 degrees, and that share one side with just one triangle. Using the lookup table, we identify the subscript, the information from D1 and D2, recovering one element of the watermark at a time. The same is repeated until all possible subscripts are found.

According to the author, the changes in the original geometry can be minimal, and unnoticeable to humans. The set of three triangles plus the grey one cannot share vertices with other similar sets. In addition, triangles with too small inner angles should be avoided, because they are very unstable even under simple geometrical transformations. To reduce the risk of missing parts of the watermark, the same information is stored many times, allowing that even if split, the model still will hold most of the watermark. If multiple copies for the same subscript element are found, the decision will be taken by simple majority. The watermark can be destroyed by randomisation of co-ordinates, by a more general class of geometrical transformations, or by extensive topological alterations like re-meshing. One interesting feature is that the original model is not required to recover the watermark. Another important property is that, given the model and the watermark, the exact original model cannot be derived from them. This might have implications regarding the ownership protocol.

Benedens (1999) also presents a spatial domain method that stores the watermark in the normals to the surface of the model. He argues that such elements are somewhat persistent in the model even under moderate modifications affecting its geometry. He maps surface normals onto the unit sphere, and then modifies the location of certain vertices, thus altering the surface normals distribution. His procedure is amenable only for private watermarking, because it requires a large amount of extra information to recover the watermark; in addition, it requires a somewhat precise reorientation of the model.

Since the previous methods modify the co-ordinates, they can be classified as spatial domain ones. As with static images, there are also frequency domain methods, like the ones presented by Date *et al*. (1999) or Praun *et al*. (1999). In the first reference, the wavelet transform of the 3D model has been used to represent it at different resolutions, allowing easy compression and efficient rendering. The *spread spectrum* principle can be applied to the coefficients of the wavelet transform, as it has been described before for images. As before, to recover the watermark the original unwatermarked model is required. In the second paper, the authors used a different but otherwise equivalent function basis decomposition. A registration process is necessary to recover the watermark, implying not only similar orientation and re-scaling, but also producing a mesh with the same connectivity as the original.

So far, we have discussed the state-of-the-art regarding robust watermarking for 3D models, and we have pointed out the similarities that can be used while implementing a 2D system. This is yet an unexplored research area, and specific procedures should be derived for GIS datasets, which are usually derived from nature. For GIS application, there is also a need for verification, an issue only considered by Yeo and Yeung (1999) for the case of 3D models.

## 4. References

Anderson, R. J. and Petitcolas, F. A. P., 1998. On the limits of Steganography. *IEEE Journal of Selected Areas in Communications*, 16, **4**, 474-481

Band, J., 1999. Making the World Safe for Databases. *IP Magazine,* April 1999

Benedens, O., 1999. Geometry-Based Watermarking of 3D models. *IEEE Computer Graphics and Applications*. 46-55

Bender, W.; Gruhl, D.; Morimoto, N and Lu, A., 1996. Techniques for data hiding. *IBM Systems Journal*, **35**, 3-4, 313-336

Brassil, J., 1995. Electronic marking and identification techniques to discourage document copying. *IEEE J. Select. Areas Commun.*, **13**, 8, 1495-1504

Commission of the European Communities (CEC), 1996. Council Directive on the Legal Protection of Databases. COM(95) 382 Final. *Official Journal of the European Communities of* 27/3/96

Cox, I. J.; Kilian, J.; Leighton, T. and Shamoon, T., 1997. Secure Spread Spectrum Watermarking for Multimedia. *IEEE Trans. on image Processing,* **6**, 12, 1673-1687

Cox, I. J. and Linnartz, J. P. M. G., 1998. Some General Methods for Tampering with Watermarks. *IEEE Journal on Selected Areas in Communications*, **16,** 4, 587-593.

Craver, S.; Memon, N.; Yeo, B. L. And Yeung, M., 1998. Resolving rightful ownerships with invisible watermarking techniques: limitations, attacks and implications. *IEEE Journal on Selected Areas in Communications*, **16,** 4, 573-586

Date, H.; Kanai, S. And Kishinami, T., 1999. Digital Watermarking for 3D polygonal model based on wavelet transform. *Proceedings of DETC'99 - 1999 ASME Design Engineering Technical Conferences. September 12-15, 1999, Las Vegas, Nevada.* DETC99/CIE-9031, 10pp.

Delaigle, J. F.; Vleeschouwer, C. D. and Macq, B., 1998. Watermarking algorithm based on a human visual model. *Signal Processing,* **66**, 3, 319-335.

Fredricsson, P., 2000. Vattenmärkning i digitala miljöer. (Watermarking in digital media). *Unpublished manuscript (in swedish, also translated to spanish*).

Garland, M., 1999. Multiresolution Modeling: Survey & Future Opportunities. *EUROGRAPHICS'99,* ISSN 1017-4956, 111-131

Gopalakrishnan, K; Memon, N. and Vora, P., 1999. Protocols for Watermark Verification. *Proceedings of the Multimedia and Security Workshop (held as a part of the 7th annual ACM International Multimedia Conference at Orlando, Florida in Oct 1999),* GMD Report No. 85, Dec. 1999, 91-94.

Karjala, D., 1995. Copyright in electronic maps. *Jurimetrics J.*, **35**, 395-415

Kutter, M. and Petitcolas, F. A. P., 1999. A fair benchmark for Image watermarking systems. *P. W. Wong and E. J. Delp, Eds. Security and Watermarking of Multimedia Contents, ISBN 0-8194-3128,* 226-239

Kutter, M.; Jordan, F. and Bossen, F., 1998. Digital signature of color images using amplitude modulation. *Journal of Electronic Imaging, 7,* 2, 326-332

Kutter, M.; Voloshynovskiy, S. And Herrigel, A., 2000. The Watermark Copy Attack. *In Proceedings of SPIE: Security and Watermarking of Multimedia Content II,* Vol 3971, San José, CA, USA, 10 pp.

Low, S. H. and Maxemchuk, N. F., 1998. Performance Comparison of Two Text Marking Methods. *IEEE Journal on Selected Areas in Communications*, **16**,4,561-572

Low, S. H., Maxemchuk, N. F. and Lapone, A. M., 1998. Document identification for copyright protection using Centroid detection. *IEEE Trans. Commun.*, **46**,372-383

Memon, N. and Wong, P. W., 1998. A Buyer-Seller Watermarking Protocol. *IEEE Workshop on Multimedia Signal Processing (MMSP-98), Dec. 7-9, Los Angeles, California, USA*, 278-283

Mintzer, F. C.; Boyle, L.E.; Cazes, A. N.; Christian, B.S.; Cox, S.C.; Giordano, F.P.; Gladney, H. M.; Lee, J. C.; Kelmanson, M. L.; Lirani, A. C.; Magerlein, K. A.; Pavani, A. M. B. and Schiattarella, F., 1996, Towards on-line, worldwide access to Vatican Library materials. *IBM Journal of Research and Development, 4,* 2, http://www.research.ibm.com/journal/rd/mintz/mintzer.htm

Nikolaidis, N. and Pitas, I., 1996. Copyright protection of images using robust digital signatures. *IEEE Int. Conf. on Acoustics, Speech and Signal Processing (ICASSP-96)*, **4,** 2168-2171

Nikolaidis, N. and Pitas, I., 1998. Robust image watermarking in the spatial domain. *Signal Processing,* **66**, 385-403

O'Gorman, L., 1993. The document spectrum for structural page layout analysis. *IEEE Trans. pattern Analysis and Machine Intelligence*, **15**, 11, 1162-1173

Ohbuchi, R.; Masuda, H. and Aono, M., 1997. Watermarking Three-Dimensional Polygonal Models. *ACM Multimedia 97,* ACM Press, 261-272

Ohbuchi, R.; Masuda, H. and Aono, M., 1998. Watermarking Three-Dimensional Polygonal Models through Geometric and Topological Modifications. *IEEE J. on Selected Areas in Communications*, **16,** 4, 551-560

Onsrud, H. J and López, X., 1998. Intellectual property rights in disseminating digital geographic data, products and services: conflicts and commonalities among European Union and United States approaches. In *European Geographic Information Infrastructures: Opportunities and Pitfalls.* Masser, I. and Salgé, F., Eds. Taylor and Francis. 153-167

Petitcolas, F. and Kuhn, M., 1997. StirMark 2.
   http://www.cl.cam.ac.uk/~fapp2/watermarking/stirmark/

Podilchuk, C. and Zeng, W., 1998. Image Adaptive Watermarking Using Visual Models. *IEEE Journal on Selected Areas in Communications*, **16**,4,525-540

Praun, E.; Hoppe, H. and Finkelstein, A., 1999. Robust mesh watermarking. *Computer Graphics (SIGGRAPH 1999 Proceedings),* 69-76. Also available at
   http://www.cs.princeton.edu/gfx/proj/meshwm.

Ramkumar, M. And Akansu, A. N., 1999. Image Watermarks and Counterfeit Attacks: Some problems and Solutions. *Content Security and Data Hiding in Digital Media, Newark, NJ*, 102-112

Ramkumar, M., 1999, Data hiding in Multimedia - Theory and Applications, *Ph. D. Dissertation, New Jersey Institute of Technology, Department of ECE, University Heights, Newark, NJ 07032,* 68 pp.

Schneier, B. 1995, Applied Cryptography: Protocols, Algorithms and Source Code in C. John Wiley & Sons, ISBN: 0471117099

Servetto, S. D.; Podilchuk, C. I. and Ramchandran, K., 1998. Capacity issues in Digital Image Watermarking. *In Proc. of the IEEE Int. Conf. on Image Processing. Chicago, IL*. 5pp.

Special Issue on Watermarking, 1998, *Signal Processing*, **66**, 3

Special Issue, 1998, *IEEE J Selected Areas in Comm*, **16,** 4

Thorner, B. B., 1997. Copyright Protection for Computer Databases: The Threat of *Feist* and a Proposed Solution. *Virginia Journal of Law and Technology*, **1**, 5.
   http://vjolt.student.virginia.edu/graphics/vol1/home.html

van Schyndel, R. G.; Tirkel, A. Z. and Osborne, C. F., 1994. A digital Watermark. *Proc. of the IEEE Int. Conf. on Image Processing (ICIP'94)* vol II, 86-90

Voyatzis, G. and Pitas, I., 1999, Protecting Digital-Image Copyrights: A Framework. *IEEE Computer Graphics and Applications*, 19, **1**, 18-24

Yeo, B. L and Yeung, M. M., 1999. Watermarking 3D Objects for Verification. *IEEE Computer Graphics and Applications,* 36-45

Zeng, W. and Liu, B., 1999. A statistical watermark detection technique without using original images for resolving rightful ownerships of digital images. *IEEE Trans. Image Processing,* **8**, 11, 1534-1548

Zhao, J.; Kock, E. And Luo, C., 1998, In Business Today and Tomorrow. *Communications of the ACM*, **41**, 7, 67-72

## 5. Description of the Method

The method provides a binary answer: given the vector dataset and a secret key known only to the data producer, there is an algorithm that states whether or not the watermark is present in the dataset. In fact, it produces a *correlation* value, which should be ideally 1.0 when the watermark is present and substantially less, when not. The watermark is repeatedly embedded in the dataset and this allows it to be detected even in a modified version. The possible modifications may include deleting polygonals, changes of attributes, minor positional variations, etc. The detection stage requires the digital version and does not require the original one.

To insert the watermark, a pseudo-random number generator with uniform distribution is seeded with the key provided by the owner. A different key is produced for a different customer, date, etc. The owner should keep a record of the key, customer, date, version, etc. for each original dataset. Each version of each original might have many customers associated. This database should be kept under secrecy because, in order to test the illegal copy, the secret keys should be used to identify the owner. Thus, no explicit information about the customer himself is directly included in the files: only his key.

The watermark is a binary number, and its length must be defined before inserting it. Short watermarks are uninteresting because the probability of finding a watermark when it is not present is high. On the other hand, long watermarks are difficult to insert, because many datasets might not be complex enough to provide a space for it. The exact length of the watermark depends upon the vector dataset itself. A suitable value will be over 20 bits, allowing the production of approximately $2^{20}$ different watermarks, a comfortable large size watermark space enough to reliably distinguish between customers.

Every polygonal has exactly one starting point and one ending point. From now on, they will be known as nodes. The other points in the polygonal are designed vertices. Each polygonal might have any number of vertices.

The watermark will only be embedded in those polygonals that have *enough* vertices, i. e. more than three times the number of bits. This is not a strong requirement, but experience has shown it is appropriate. If this requirement is not fulfilled, the digital dataset should be regarded as too simple, and no watermark of the required length may be embedded with this method.

The polygonal has a starting point $V_1$ and an ending point $V_N$, as well as interior vertices $V_i$, with i ranging from 2 to N-1. Its length is defined through the following formula:

$$L = \sum_{i=1}^{i=N-1} \sqrt{\left((x_{i+1} - x_i)^2 + (y_{i+1} - y_i)^2\right)}$$

The curvilinear co-ordinates of the polygonal can be established once a starting point is defined. Each vertex will have a particular value, and they will form a set of discrete values, larger or equal to zero, and less or equal to L. They can be made relative dividing by L, so that the relative curvilinear co-ordinates will belong to the closed interval [0,1], being the extreme values the co-ordinates of the initial node (0.00) and the end node (1.00). Every vertex will have a co-ordinate in between, according with the following equivalent formulae:

$$s_1 = 0 \; ; s_{i+1} = s_i + \frac{\sqrt{\left((x_{i+1} - x_i)^2 + (y_{i+1} - y_i)^2\right)}}{L} = \frac{1}{L} \sum_{k=1}^{k=i-1} \sqrt{\left((x_{k+1} - x_k)^2 + (y_{k+1} - y_k)^2\right)}$$

The watermark of length W is composed by W real numbers belonging to the open interval (0,1). The extremes are not included. The sequence has no particular order; any permutation of the W real numbers is allowed. Invoking W times a pseudo-random number generator, it may possible to create the watermark. The pseudo-random number generator should produce a uniformly distributed sequence. The other requirement is that the generator should depend on a single seed, and the sequence should be repeatable. There are many possible alternative algorithms to choose, and no particular one is preferred for this application.

By inserting extra vertices over the polygonal the watermark is embedded. The vertex location is determined by specifying the curvilinear co-ordinate, which should be equal to the watermark entries. Thus, every element in the watermark is coded by locating an extra vertex. This is repeated for all the possible polygonal in the dataset, provided it has more than 3W elements.

Given the dataset and the key, the watermark is recovered very easily. The length of every polygonal is calculated, and the curvilinear co-ordinates of their vertices are established. If within a prescribed tolerance there is a vertex with a co-ordinate equal to the one established in the watermark, one bit is detected. For example, if over 80% of the bits are detected in at least one polygonal, then the watermark is said to be present in the map.

## Claims

1. A combined process of *insertion* of a watermark in a digital file composed of polygonals (as is the case of a cartographic map, or an architect's plan) or similar items, and a *detection process* of presence/absence of the mark. The insertion process is **characterised by**:

   a) It does not affect the digital map in any perceptible way, even after printing.
   b) The mark is inserted in the geometry itself, and not in the attributes of the polygonals.
   c) The mark can be build with a pseudo-random number generator with even distribution, initialised by a seed which will work as a key for the client, who will be thus univocally identified.
   d) The mark is a binary number of prescribed length, and its maximum length will be related to the type of map.
   e) The mark is inserted in the polygonals with a content of at least three times vertices to the length of the mark.
   f) The inserted mark is immune to common isometric transformations, such as rotation, translation, and uniform scaling.
   g) The inserted mark might survive even after deletion or splitting of some polygonals in the file, thus remaining in the dataset.

2. Procedure according to replevin Nr. 1 **characterised by** the fact that the detection of a particular mark requires the possibility of generating it, and that may only be possible if the key associated to the customer is known. The key is kept under secrecy. The presence of a particular mark identifies the original file from which the copy under examination has been obtained, and therefore it is possible to trace it back to its source.

3. Procedure as described in the previous paragraphs, **characterised by** the fact that the detection of the presence or absence of a mark is performed by the use of a suitable algorithm which produces a correlation value which when being close to 1.0 denotes the existence of the mark and when it is clearly less than 1.0 indicates the absence of the referred mark.

4. Procedure as described in the previous paragraphs, **characterised by** the fact that the detection stage does not require access to the original dataset, but just to the key. The original, unwatermarked file is kept under secrecy.

5. Procedure **characterised by** the fact that it does not depend or rely on the format, number of bits, etc. in which the digital file is stored inside a computer system, but only on the geometric information itself represented by it.

**INTERNATIONAL SEARCH REPORT**

| International application No. |
| --- |
| PCT/ES/01/00501 |

| A. CLASSIFICATION OF SUBJECT MATTER |
| --- |
| IPC $^7$    H04L 9/20, H04N 1/32, G09C 5/00, G06T 11/20 |
| According to International Patent Classification (IPC) or to both national classification and IPC |

| B. FIELDS SEARCHED |
| --- |
| Minimum documentation searched (classification system followed by classification symbols) |
| IPC $^7$    H04L 9/00, H04N 1/32, G06T, G09C 5/00 |
| Documentation searched other than minimum documentation to the extent that such documents are included in the fields searched |
| Electronic data base consulted during the international search (name of data base and, where practicable, search terms used) |
| EPODOC, WPI, PAJ, CIBEPAT |

C. DOCUMENTS CONSIDERED TO BE RELEVANT

| Category* | Citation of document, with indication, where appropriate, of the relevant passages | Relevant to claim No. |
| --- | --- | --- |
| X | WO 96/36163 A2 (DIGIMARC CORPORATION) 14.11.1996, pages 61-63 | 1-5 |
| X | US 5636292 A (RHOADS) 03.06.1997, column 56-57 | 1-5 |
| X | WO 97/43736 A1 (DIGIMARC CORPORATION) 20.11.1997, pages 62-67 | 1-5 |
| P, X | WO 01/71960 A1 (DIGIMARC CORPORATION) 27.09.2001, page 31, lines 6-26 | 1-5 |
| P, X | EP 1089550 A2 (KABUSHIKI KAISHA TOSHIBA) 04.04.2001, paragraphs 268-275, claims 31 | 1-5 |
| Y | WO 95/14289 A2 (PINECONE IMAGING CORP.) 26.05.1995, the whole document | 1-5 |
| Y | EP 0961239 A2 (DIGIMARC CORPORATION) 01.12.1999, the whole document | 1-5 |

| ☐ Further documents are listed in the continuation of Box C. | ☒ See patent family annex. |
| --- | --- |

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 17 April 2002 (17.04.02) | 23 April 2002 (23.04.02) |

| Name and mailing address of the ISA/ <br><br> **S.P.T.O.** <br> Facsimile No. | Authorized officer <br><br><br> Telephone No. |
| --- | --- |

Form PCT/ISA/210 (second sheet) (July 1992)

## INTERNATIONAL SEARCH REPORT
Information on patent family members

International Application No

PCT/ES/01/00501

| Patent document cited in search report | Publication date | Patent familiy member(s) | Publication date |
|---|---|---|---|
| WO9636163 | 1996-11-14 | CA2218957 A | 1996-11-14 |
| | | AU6022396 A | 1996-11-29 |
| | | EP0824821 A | 1998-02-25 |
| | | US5748783 A | 1998-05-05 |
| | | US5832119 A | 1998-11-03 |
| | | US5841978 A | 1998-11-24 |
| | | US5841886 A | 1998-11-24 |
| | | US5862260 A | 1999-01-19 |
| | | EP1003324 A | 2000-05-24 |
| | | US6111954 A | 2000-08-29 |
| | | US6122403 A | 2000-09-19 |
| | | EP1049320 A | 2000-11-02 |
| | | US2001010730 A | 2001-08-02 |
| | | US2001016051 A | 2001-08-23 |
| | | US6286036 B | 2001-09-04 |
| | | EP1137251 A | 2001-09-26 |
| | | US2001032251 A | 2001-10-18 |
| | | US6311214 B | 2001-10-30 |
| | | US6324573 B | 2001-11-27 |
| | | US2001055407 A | 2001-12-27 |
| | | US2002009208 A | 2002-01-24 |
| | | JP2002504272 T | 2002-02-05 |
| | | US2002016816 A | 2002-02-07 |
| | | US2002029253 A | 2002-03-07 |
| US5636292 A | 1997-06-03 | US5832119 A | 1998-11-03 |
| | | US5841978 A | 1998-11-24 |
| | | US5841886 A | 1998-11-24 |
| | | US6324573 B | 2001-11-27 |
| | | US2002029253 A | 2002-03-07 |
| WO9743736 A | 1997-11-20 | AU3008697 A | 1997-12-05 |
| | | US5862260 A | 1999-01-19 |
| | | EP1019868 A | 2000-07-19 |
| | | US6122403 A | 2000-09-19 |
| | | US6229924 B | 2001-05-08 |
| | | US2001016051 A | 2001-08-23 |
| | | US2001017931 A | 2001-08-30 |
| | | US2001019618 A | 2001-09-06 |
| | | US2001022848 A | 2001-09-20 |
| | | US2001031065 A | 2001-10-18 |
| | | US6307949 B | 2001-10-23 |
| | | US2001055407 A | 2001-12-27 |
| | | US2002006212 A | 2002-01-17 |
| | | US2002009208 A | 2002-01-24 |
| WO0171960 A | 2001-09-27 | WO0155889 AB | 2001-08-02 |
| | | AU3458101 A | 2001-08-07 |
| | | AU4745701 A | 2001-10-03 |
| | | US2001031066 A | 2001-10-18 |
| | | US2001036292 A | 2001-11-01 |
| | | US2001037313 A | 2001-11-01 |
| | | US2001044899 A | 2001-11-22 |
| | | US2001054150 A | 2001-12-20 |
| | | WO0208945 A | 2002-01-31 |

### INTERNATIONAL SEARCH REPORT
Information on patent family members

International Application No

PCT/ES/01/00501

| Patent document cited in search report | Publication date | Patent familiy member(s) | Publication date |
|---|---|---|---|
| EP1089550 A | 2001-04-04 | CN1291041 A | 2001-04-11 |
| | | JP2001285623 A | 2001-10-12 |
| WO9514289 A | 1995-05-26 | CA2174413 A | 1995-05-26 |
| | | EP0737387 A | 1996-10-16 |
| | | JP9509795 T | 1997-09-30 |
| | | US5745604 A | 1998-04-28 |
| | | US5748763 A | 1998-05-05 |
| | | US5768426 A | 1998-06-16 |
| | | US5832119 A | 1998-11-03 |
| | | US5841978 A | 1998-11-24 |
| | | US5841886 A | 1998-11-24 |
| | | US5850481 A | 1998-12-15 |
| | | US5862260 A | 1999-01-19 |
| | | EP0959621 AB | 1999-11-24 |
| | | EP0959620 A | 1999-11-24 |
| | | US6026193 A | 2000-02-15 |
| | | EP0987855 A | 2000-03-22 |
| | | US6111954 A | 2000-08-29 |
| | | US6122392 A | 2000-09-19 |
| | | AT199469 T | 2001-03-15 |
| | | DE69426787 D | 2001-04-05 |
| | | ES2156456 T | 2001-06-16 |
| | | US2001005423 A | 2001-06-28 |
| | | US6266430 B | 2001-07-24 |
| | | US2001010730 A | 2001-08-02 |
| | | US2001012377 A | 2001-08-09 |
| | | DE69426787 T | 2001-08-30 |
| | | US6285776 B | 2001-09-04 |
| | | US6289108 B | 2001-09-11 |
| | | US2001022848 A | 2001-09-20 |
| | | US2001031065 A | 2001-10-18 |
| | | US6324573 B | 2001-11-27 |
| | | US6330335 B | 2001-12-11 |
| | | US2001053236 A | 2001-12-20 |
| | | US2002001396 A | 2002-01-03 |
| | | US6343138 B | 2002-01-29 |
| | | US6345104 B | 2002-02-05 |
| | | US2002018579 A | 2002-02-14 |
| | | US2002018572 A | 2002-02-14 |
| | | US6353672 B | 2002-03-05 |
| | | US2002029253 A | 2002-03-07 |
| | | US6363159 B | 2002-03-26 |
| EP961239 A | 1999-12-01 | CA2326565 A | 1999-10-21 |
| | | WO9953428 A | 1999-10-21 |
| | | AU3562999 A | 1999-11-01 |
| | | GB2353168 A | 2001-02-14 |
| | | US6285776 B | 2001-09-04 |
| | | US2001022848 A | 2001-09-20 |
| | | US2001031065 A | 2001-10-18 |
| | | US6345104 B | 2002-02-05 |
| | | US2002018579 A | 2002-02-14 |
| | | US2002021825 A | 2002-02-21 |

Form PCT/ISA/210 (patent family annex) (July 1992)